Europäisches Patentamt

European Patent Office

Office européen des brevets

(19)

(11) Numéro de publication: **0 079 100**
**A1**

(12) **DEMANDE DE BREVET EUROPEEN**

(21) Numéro de dépôt: **82201363.7**

(22) Date de dépôt: **01.11.82**

(51) Int. Cl.³: **F 02 B 37/10**

(30) Priorité: **10.11.81 FR 8121214**

(43) Date de publication de la demande:
**18.05.83 Bulletin 83/20**

(84) Etats contractants désignés:
**BE DE GB IT NL SE**

(71) Demandeur: **MICROTURBO S.A.**
**Chemin du Pont-de-Rupé B.P. 2089**
**F-31019 Toulouse Cédex(FR)**

(72) Inventeur: **Bayard, Gaston**
**6, Place Wilson**
**F-31000 Toulouse(FR)**

(72) Inventeur: **Secher, Bernard**
**23, boulevard des Minimes**
**F-31200 Toulouse(FR)**

(74) Mandataire: **Barre, Philippe**
**Cabinet Barre-Gatti-Laforgue 93-95 rue des Amidonniers**
**F-31069 Toulouse Cédex(FR)**

(54) **Turbo-compresseur de suralimentation d'un moteur à explosion.**

(57) L'invention concerne un turbo-compresseur permettant de suralimenter un moteur à explosion, en particulier un moteur à explosion équipant un véhicule.

Ce turbo-compresseur comprend une machine électromagnétique réversible 9, génératrice/réceptrice, associée à l'arbre de liaison 1 reliant le compresseur 2 et la turbine 3; les bobinages 9b du stator de cette machine sont électriquement reliés à des moyens électriques de commutation et à des moyens de contrôle et de régulation, qui permettent de réaliser les commutations d'un régime à l'autre, afin, soit de fournir un courant de charge vers une batterie, soit de participer à l'entraînement et à l'accélération de l'arbre de liaison 1 et donc du compresseur 2.

Fig. 1

EP 0 079 100 A1

# TURBO-COMPRESSEUR DE SURALIMENTATION
## D'UN MOTEUR A EXPLOSION

L'invention concerne un turbo-compresseur permettant de suralimenter un moteur à explosion en particulier un moteur à explosion équipant un véhicule.

On sait que de nombreux avantages sont obtenus en équipant les moteurs à explosion, de turbo-compresseurs qui permettent de comprimer l'air d'admission du moteur en utilisant l'énergie résiduelle des gaz d'échappement ; les turbo-compresseurs connus sont essentiellement composés d'une turbine placée sur le trajet des gaz d'échappement et d'un compresseur placé sur le trajet de l'air d'admission et mécaniquement lié à la turbine pour être entraîné par celle-ci ; des moyens auxiliaires viennent le cas échéant compléter le système en fonction des impératifs de l'application envisagée (régulation de la température de l'air comprimé d'admission, régulation de la pression de suralimentation,...).

L'avantage essentiel de ces turbo-compresseurs est d'augmenter le rendement global du moteur grâce à une récupération partielle d'énergie à l'échappement et à une réduction des frottements mécaniques. Ainsi, le turbo-compresseur permet :

. soit, à cylindrée égale, une augmentation du couple et de la puissance du moteur sans augmentation de la consommation,

. soit, à puissance égale, une réduction de la cylindrée, de l'encombrement et du poids du moteur.

De plus, le moteur suralimenté est peu sensible aux variations de la pression atmosphérique.

Toutefois, ce type de moteur à turbo-compresseur a le défaut de posséder un temps de réponse assez long lorsque le conducteur demande une élévation rapide du régime (de l'ordre de 3 à 4 secondes). En effet, l'augmentation de la compression de l'air d'admission (qui permet d'atteindre le taux de compression correspondant au nouveau régime) est provoquée par une augmentation de la vitesse de rotation de la turbine, provenant elle-même d'un accroissement de l'énergie disponible en fin de chaîne, au niveau des gaz d'échappement ; une brusque accélération s'étale donc sur un grand nombre de cycles de combustion et se répercute de façon très progressive et relativement lente.

De plus, l'énergie disponible au niveau des gaz d'échappement est, la plupart du temps très excédentaire par rapport à l'énergie nécessaire à l'entraînement du turbo-compresseur, et des systèmes de freinage doivent être prévus pour éviter l'emballement de celui-ci (par exemple système de dérivation d'une partie des gaz d'échappement) ; ainsi les turbo-compresseurs ne réalisent qu'une récupération très limitée de l'énergie des gaz d'échappement, notamment à haut régime.

Ceci est d'autant plus insatisfaisant que, par ailleurs, une énergie mécanique noble qui pourrait être directement utilisée au niveau des roues, est prélevée sur le vilebrequin du moteur pour faire tourner un alternateur, afin de générer l'énergie électrique nécessaire au véhicule. Cette énergie mécanique prélevée est loin d'être négligeable et peut représenter jusqu'à 10 % de l'énergie totale mise en jeu.

La présente invention se propose d'étendre les avantages des turbo-compresseurs et d'accroître encore les économies d'énergie que permettent ces équipements.

Un objectif de l'invention est, en particulier, de fournir un turbo-compresseur perfectionné, capable d'assurer une récupération accrue de l'énergie résiduelle des gaz d'échappement d'un moteur.

Un autre objectif, lié au précédent, est de réduire ou même de supprimer le prélèvement d'énergie mécanique au niveau du vilebrequin ou autres organes de transmission du moteur.

Un autre objectif est de réduire l'inertie des moteurs à turbo-compresseur de façon à permettre des temps de réponse notablement plus faibles lors de sollicitations rapides en accélération.

A cet effet, l'invention vise un turbo-compresseur de suralimentation d'un moteur à explosion, du type comprenant un compresseur agencé pour comprimer l'air d'admission du moteur, une turbine agencée pour être entraî-

née par les gaz d'échappement dudit moteur, et un arbre de liaison mécanique reliant ledit compresseur et ladite turbine ; selon la présente invention, le turbo-compresseur se caractérise en ce qu'il comprend :

. une machine électromagnétique réversible, génératrice/réceptrice, associée à l'arbre de liaison précité, cette machine comprenant un rotor magnétique solidaire dudit arbre pour tourner avec celui-ci et un stator disposé dans le champ magnétique du rotor et comportant au moins un bobinage de puissance adapté, soit, pour développer une force électromotrice et délivrer un courant à sa sortie, en régime de génératrice de la machine, soit pour développer une force contre-électromotrice et assurer un entraînement du rotor, en régime de réceptrice,

. des moyens électriques de commutation et de mise en forme de courant, reliés à la machine génératrice/réceptrice précitée et adaptés pour réaliser la commutation d'un régime à l'autre, ces moyens étant associés à une batterie électrique et agencés de façon, soit à fournir un courant de charge vers ladite batterie à partir du courant issu de la machine génératrice/réceptrice, soit à assurer l'alimentation électrique de ladite machine génératrice/réceptrice à partir de ladite batterie.

. des moyens de contrôle et de régulation, adaptés pour commander les moyens de commutation et de mise en forme précités, en fonction du régime du moteur et de la puissance demandée.

Ainsi, en dehors des phases transitoires d'accélération rapide, la machine·électromagnétique associée à l'arbre du turbo-compresseur travaille en génératrice et prélève une fraction supplémentaire de l'énergie des gaz d'échappement pour générer un courant qui sert à charger la batterie électrique ; de la sorte, dans le cas d'un véhicule, il est possible de réduire la puissance de l'alternateur traditionnel (mécaniquement lié au vilebrequin du moteur) ou même de supprimer entièrement celui-ci, une partie ou la totalité de l'énergie électrique nécessaire au véhicule étant fournie par le turbo-compresseur conforme à l'invention. Ceci autorise des économies de carburant notables, puisque la puissance électrique est alors tirée, au moins en partie, de l'énergie résiduelle des gaz d'échappement qui est excédentaire et serait de toute façon perdue.

Pendant les phases transitoires d'accélération rapide, la machine est commutée pour travailler en réceptrice (machine motrice) et participer ainsi à l'entraînement du compresseur et à son accélération ; l'augmentation de la vitesse de rotation de celui-ci est donc beaucoup plus rapide que dans les moteurs à turbo-compresseur classiques et ce, d'autant plus que la commutation électrique est une opération quasi instantanée qui peut être commandée à l'instant même de la sollicitation et que l'inertie d'une machine électromagnétique est très faible.

Par ailleurs, selon une autre caractéristique de l'invention, le turbo-compresseur est équipé d'un capteur de vitesse et/ou de position, associé à l'arbre dudit turbo-chargeur et adapté pour délivrer un signal représentatif à chaque instant de la vitesse de rotation et/ou de la position angulaire de cet arbre ; ce signal est délivré vers les moyens de contrôle et de régulation et permet de prendre en compte le régime du moteur, d'une part, pour déclencher les commutations, d'autre part, en régime de réceptrice, pour adapter et réguler le courant d'alimentation de la machine électromagnétique.

Selon une autre caractéristique de l'invention, le turbo-compresseur est également équipé d'un détecteur d'accélération, associé au système d'accélération du moteur et adapté pour délivrer un signal représentatif à chaque instant de l'état de ce système ; ce signal est délivré vers les moyens de contrôle et de régulation et permet de prendre en compte la puissance demandée. Il participe, avec le signal issu du capteur de vitesse, pour commander le déclenchement des commutations et la régulation du courant d'alimentation de la machine (en régime de réceptrice).

L'invention ayant été exposée dans sa forme générale, d'autres caractéristiques se dégageront de la description qui suit en référence aux dessins annexés, qui en présentent, à titre d'exemple non limitatif, un mode de réalisation ; sur ces dessins qui font partie intégrante de la présente description :

- la figure 1 est une vue en demi-coupe schématique d'un turbo-compresseur conforme à l'invention,

- la figure 2 est un schéma synoptique montrant les moyens électriques dudit turbo-compresseur,

- la figure 3 est un schéma synoptique d'un exemple de réalisation des moyens de contrôle et de régulation.

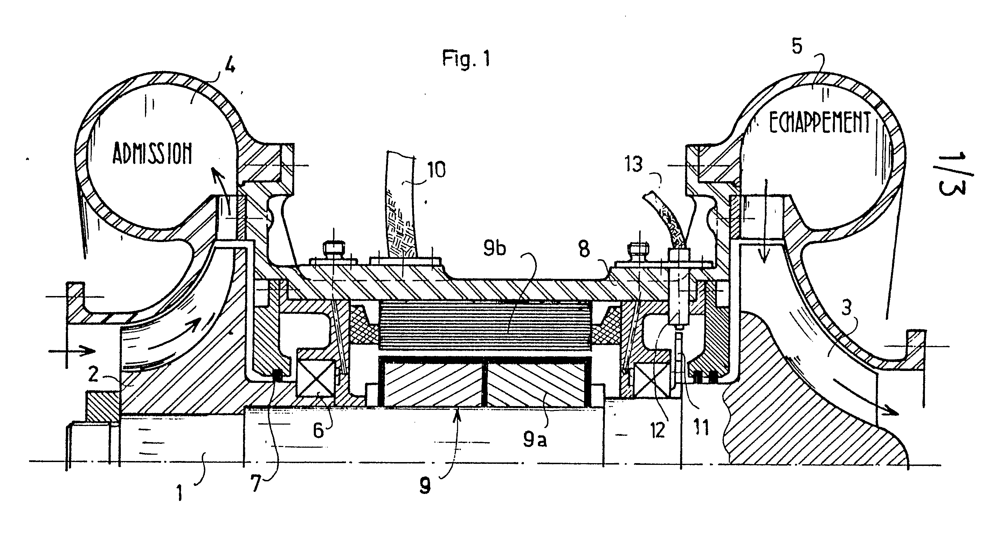

Le turbo-compresseur représenté à titre d'exemple à la figure 1 comprend un arbre 1 sur lequel sont montées une roue de compresseur 2 et une roue de turbine 3.

La roue de compresseur 2 reçoit de l'air extérieur à la pression atmosphérique et le refoule en le comprimant vers une volute de compresseur 4 qui est reliée aux cylindres du moteur à explosion.

La roue de turbine 3 reçoit les gaz d'échappement à la sortie des cylindres à travers une volute de turbine 5, et transforme une fraction de l'énergie de ces gaz en énergie mécanique de rotation.

De façon classique, l'arbre 1 qui peut tourner à des vitesses de rotation très élevées (jusqu'à 100 000 tours/minute) est monté sur des paliers à huile 6 avec adjonction de segments d'étanchéité 7 ; l'ensemble est contenu dans un carter 8.

Dans sa partie médiane, l'arbre 1 porte un rotor 9a d'une machine électromagnétique 9. Ce rotor fixé sur cet arbre comprend, de façon connue en soi, un aimant permanent fretté.

La machine 9 comprend un stator 9b composé d'un bobinage de puissance et d'un bobinage de commande dont les enroulements sont réalisés de façon classique sur un noyau et positionnés en regard du rotor (il est à noter que, pour couper correctement les lignes de forces du champ magnétique du rotor, les enroulements du stator sont sensiblement situés, non pas dans des plans radiaux, mais au contraire, dans des plans passant par l'axe longitudinal). Le bobinage de puissance peut en particulier être un bobinage triphasé monté en étoile ou en triangle.

Les bobinages de puissance et de commande sont reliés à des fils de branchement qui sortent du carter par une gaine 10.

Par ailleurs, l'arbre 1 porte une roue 11 d'un capteur de vitesse et/ou de position. Cette roue (dite phonique) est dotée d'un ergot ferromagnétique qui passe à chaque tour devant une bobine fixe de détection magnétique symbolisée en 12. Le signal généré par cette bobine est transmis par des fils 13.

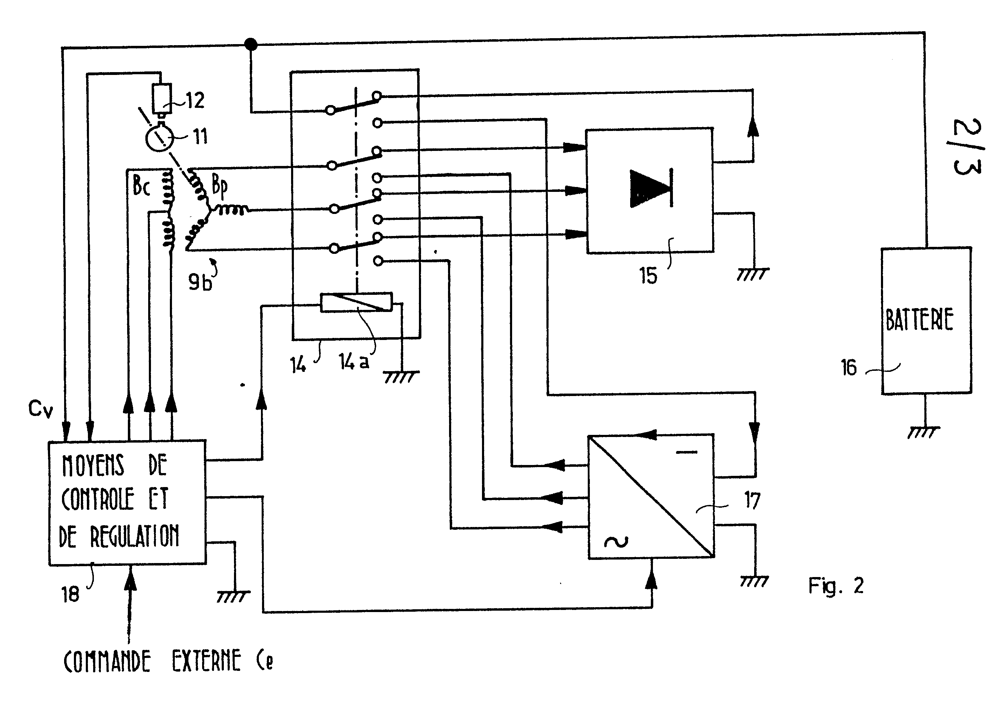

La figure 2 schématise les moyens électriques qui sont associés à la machine électromagnétique 9 ; les bobinages de puissance et de commande du stator 9b de celle-ci ont été schématisés en Bp et Bc sur cette figure.

Ces moyens électriques comprennent essentiellement :

- un commutateur 14 qui est commandé par un relais 14a,

- un pont redresseur 15 dont l'entrée (triphasée en l'exemple) peut être connectée, par le commutateur 14, au bobinage de puissance Bp et la sortie, à la batterie électrique 16 du véhicule,

- un convertisseur continu/alternatif 17 dont l'entrée peut être reliée, par le commutateur 14, à la batterie 16 et la sortie (en l'exemple triphasée) au bobinage de puissance Bp,

- enfin des moyens de contrôle et de régulation 18 recevant un signal de commande externe (représentatif de l'état du système d'accélération du véhicule) et le signal issu du capteur de vitesse et/ou de position 12 ; les moyens de contrôle et régulation 18 sont également reliés à la batterie 16 en vue de prendre en compte les caractéristiques de celle-ci et d'y prélever l'énergie électrique nécessaire à leur fonctionnement.

Ces moyens de contrôle et de régulation sont adaptés pour remplir essentiellement les fonctions (a), (b), (c) résumées ci-après :

(a) Ils sont reliés au relais 14a du commutateur 14 en vue de commander les commutations en fonction de la vitesse de rotation de l'arbre 1, de l'état du système d'accélération (commande externe) et de l'état de charge de la batterie 16.

(b) Ils sont reliés au bobinage de commande Bc pour délivrer vers celui-ci un courant de régulation
apte à assurer une régulation soit, en régime de génératrice,
de la tension du courant de charge de la batterie en fonction
des caractéristiques de celle-ci, soit, en régime de réceptrice, de la force contre-électromotrice d'entraînement du rotor
en fonction de la vitesse de celui-ci.

(c) Ils sont reliés au convertisseur 17 en
vue d'asservir la fréquence et la tension de sortie de celui-
ci en fonction de la vitesse et de la position de l'arbre 1
ainsi que de l'état du système d'accélération du moteur
(commande externe).

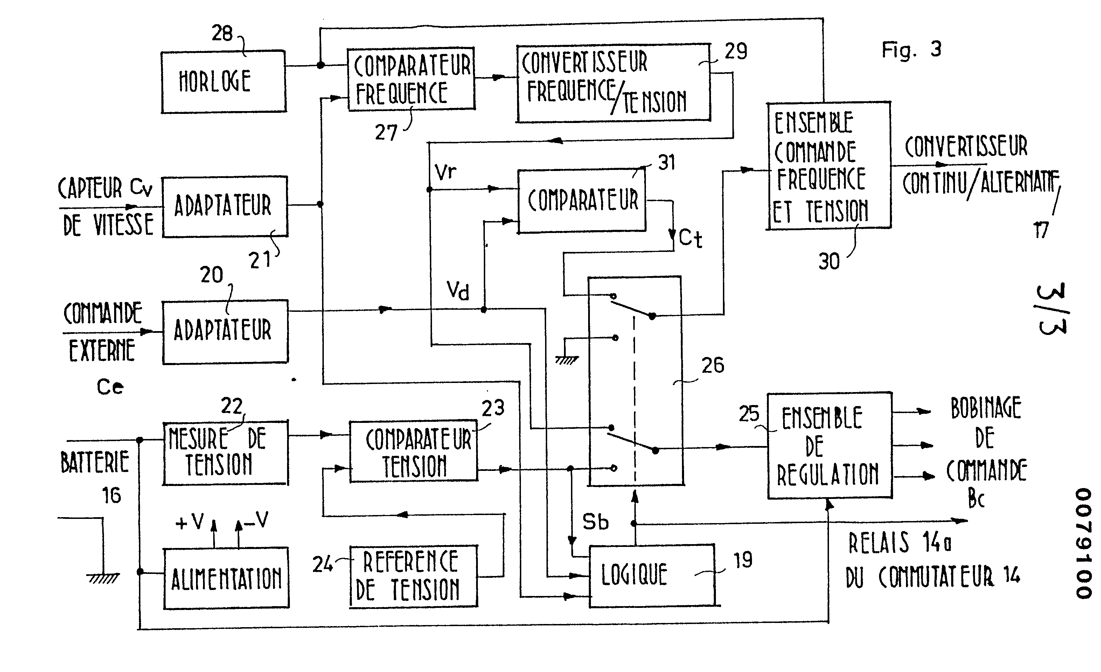

La figure 3 présente un schéma synoptique
d'un exemple de réalisation de ces moyens de contrôle et de
régulation 18.

Dans l'exemple représenté sur ce schéma,
le relais 14a du commutateur 14 est commandé par une logique
19 qui reçoit, d'une part, le signal de commande externe Ce
après adaptation, d'autre part, le signal issu du capteur de
vitesse et/ou de position Cv après adaptation, enfin un signal Sb généré à partir de la batterie 16 ; cette logique 19
est programmée pour assurer une commande appropriée des commutations en fonction de l'application.

Les moyens d'adaptation 20 et 21 du signal
de commande externe Ce et du signal issu du capteur Cv peuvent être de simples ensembles d'adaptation d'impédance.

Le signal Sb qui est délivré vers la logique 19, est obtenu grâce à un mesureur de tension 22 et à
un comparateur 23 lequel compare la valeur mesurée à une tension de référence 24 et délivre un signal de comparaison vers
la logique 19. Ce signal Sb permet de prendre en compte l'état de charge ou de décharge de la batterie, grâce à une comparaison de la tension réelle instantanée de la batterie avec
sa valeur nominale.

En outre, dans le schéma représenté, le bobinage de commande Bc du stator 9 est parcouru par un courant
de régulation généré par un ensemble de régulation 25 relié à
la batterie 16 pour y prélever l'énergie nécessaire et recevant (par l'entremise d'un commutateur 26 commandé par la logique 19) soit le signal Sb issu du comparateur 23 (en régime de génératrice), soit un signal Vr (vitesse réelle) généré à partir du capteur de vitesse et/ou de position 12 (en régime de réceptrice). Ce dernier signal Vr est obtenu en comparant dans un comparateur 27 la fréquence du signal issu du capteur de vitesse (après adaptation) à une fréquence de référence horloge 28 et en effectuant dans un convertisseur 29 une conversion fréquence/tension.

En régime de génératrice, le signal Sb permet de réguler la tension de sortie aux bornes du bobinage de puissance Bp en fonction de l'état de la batterie, en modifiant de façon appropriée, grâce au bobinage de commande Bc, le flux magnétique circulant dans la machine électromagnétique 9.

En régime de réceptrice, le signal Vr, représentatif de la vitesse de l'arbre 1, permet de réguler le flux magnétique dans la machine en fonction de cette vitesse de façon à ajuster à chaque instant la force contre-électromotrice et donc le couple moteur fourni à l'arbre 1.

Par ailleurs, dans le schéma représenté, le convertisseur continu/alternatif 17 est commandé, en régime de réceptrice de la machine, par un ensemble 30 de commande de fréquence et tension, recevant les signaux de référence horloge 28 et, à travers le commutateur 26, un signal $C_T$, issu d'un comparateur 31 dont les entrées sont reliées au convertisseur 29 et à l'adaptateur 20 pour recevoir les signaux Vr et Vd.

Le signal $C_T$ est représentatif de la différence entre la vitesse réelle de l'arbre 1 et la vitesse demandée par la commande externe et permet, en régime de réceptrice, d'ajuster la fréquence et la tension de sortie du convertisseur 17 pour réguler la vitesse et l'accélération de cet arbre en conjonction avec l'action du bobinage de commande Bc.

Bien entendu, la description précédente est fournie à titre purement illustratif et l'invention n'est pas limitée aux termes de celle-ci.

En particulier, le commutateur 14 peut être un système électromécanique à relais comme symbolisé à la figure 2, mais également tout autre système et en particulier un système électronique statique.

De même, le pont redresseur 15 et le convertisseur continu/alternatif 17 peuvent être des ensembles
séparés de tout type connu ou être regroupés sous la forme
d'un convertisseur réversible.

Par ailleurs, la machine électromagnétique
réversible 9 qui a été représentée comme un alternateur réversible triphasé peut être d'un type différent : machine à
courant continu, à courants polyphasés, etc..., les circuits
de commutation, et circuits de contrôle et de régulation
étant adaptés au type de celle-ci.

Enfin, il est à noter que la commande externe qui délivre un signal représentatif de l'état du système d'accélération du moteur à explosion peut être de différents types connus : contacteur associé à la pédale d'accélération, capteur de dépression associé au papillon d'alimentation...

L'invention est préférentiellement applicable à un moteur à explosion monté sur un véhicule mais peut
également s'appliquer à des moteurs fixes.

10

REVENDICATIONS

1/ - Turbo-compresseur de suralimentation d'un moteur à explosion, du type comprenant un compresseur (2) agencé pour comprimer l'air d'admission du moteur, une turbine (3) agencée pour être entraînée par les gaz d'échappement dudit moteur, et un arbre de liaison mécanique (1) reliant ledit compresseur et ladite turbine, ledit turbo-compresseur étant caractérisé en ce qu'il comprend :

. une machine électromagnétique réversible (9), génératrice/réceptrice, associée à l'arbre de liaison (1) précité, cette machine comprenant un rotor magnétique (9a) solidaire dudit arbre pour tourner avec celui-ci et un stator (9b) disposé dans le champ magnétique du rotor et comportant au moins un bobinage de puissance Bp adapté, soit pour développer une force électromotrice et délivrer un courant à sa sortie, en régime de génératrice de la machine, soit pour développer une force contre-électromotrice et assurer un entraînement du rotor, en régime de réceptrice,

. des moyens électriques de commutation et de mise en forme de courant (14, 15, 17) reliés à la machine génératrice/réceptrice (9) précitée et adaptés pour réaliser la commutation d'un régime à l'autre, ces moyens étant associés à une batterie électrique (16) et agencés de façon, soit à fournir un courant de charge vers ladite batterie à partir du courant issu de la machine génératrice/réceptrice, soit à assurer l'alimentation électrique de ladite machine génératrice/réceptrice à partir de ladite batterie,

. des moyens de contrôle et de régulation (18), adaptés pour commander les moyens de commutation et de mise en forme précités, en fonction du régime du moteur et de la puissance demandée.

2/ - Turbo-compresseur selon la revendication 1, caractérisé en ce que le stator (9b) de la machine génératrice/réceptrice comprend un bobinage de commande (Bc) associé au bobinage de puissance (Bp), ledit bobinage de commande étant électriquement relié aux moyens de contrôle et de régulation (18) en vue d'être parcouru par un courant de régulation apte à assurer une régulation, soit, en régime de génératrice, de la tension du courant de charge de la batterie

(16) en fonction des caractéristiques de celle-ci, soit, en régime de réceptrice, de la force contre-électromotrice d'entraînement du rotor (9a) en fonction de la vitesse de celui-ci.

3/ - Turbo-compresseur selon l'une des revendications 1 ou 2, caractérisé en ce que les moyens de commutation et de mise en forme du courant comprennent un commutateur (14) commandé par un relais (14a) asservi aux moyens de contrôle et de régulation (18), ledit commutateur étant agencé pour connecter le bobinage de puissance (Bp) de la machine génératrice/réceptrice, soit à l'entrée d'un pont redresseur (15) dont la sortie est reliée à la batterie électrique (16), soit à la sortie d'un convertisseur continu/alternatif (17) dont l'entrée est reliée à ladite batterie (16).

4/ - Turbo-compresseur selon l'une des revendications 1, 2 ou 3, caractérisé en ce qu'il comprend un capteur de vitesse et/ou de position (11, 12), associé à l'arbre de liaison (1) et adapté pour délivrer vers les moyens de contrôle et de régulation (18) un signal représentatif à chaque instant de la vitesse de rotation et/ou de la position angulaire de cet arbre, en vue de permettre la prise en compte du régime du moteur.

5/ - Turbo-compresseur selon l'une des revendications 1, 2, 3 ou 4, caractérisé en ce qu'il comprend un détecteur d'accélération, associé au système d'accélération du moteur et adapté pour délivrer vers les moyens de contrôle et de régulation (18) un signal représentatif à chaque instant de l'état de ce système, en vue de permettre la prise en compte de la puissance demandée.

6/ - Turbo-compresseur selon les revendications 3, 4 et 5 prises ensemble, caractérisé en ce que les moyens de contrôle et de régulation (18) comprennent des moyens (21) d'adaptation du signal issu du capteur de vitesse, des moyens (20) d'adaptation du signal issu du détecteur d'accélération et une logique (19) recevant les signaux issus de ces moyens et adaptée pour commander le relais du commutateur (14) en fonction d'une programmation prédéterminée.

7/ - Turbo-compresseur selon la revendica-

tion 6, caractérisé en ce que les moyens de contrôle et de régulation (18) comprennent un ensemble (30, 31) d'asservissement de la fréquence et de la tension du convertisseur continu/alternatif (17), cet ensemble recevant les signaux adaptés issus des capteur de vitesse et détecteur d'accélération et étant adapté pour délivrer vers le convertisseur (17) un signal de commande de la fréquence et de la tension de sortie.

8/ - Turbo-compresseur selon l'une des revendications précédentes, dans lequel la machine électromagnétique possède un bobinage de puissance triphasé monté en étoile ou en triangle.

Fig. 1

ADMISSION

ECHAPPEMENT

1/3

0079100

Fig. 2

Fig. 3

3/3

0079100

**0079100**

Numéro de la demande

**RAPPORT DE RECHERCHE EUROPEENNE**

Office européen
des brevets

EP  82 20 1363

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 02 B   37/10 |
| X | DE-A-2 808 147   (BRETSCHNEIDER)<br><br>*Page  4,  paragraphe 3 - page 7, paragraphe 1; figure 1* | 1,2,3,4,5,6,7 | |
| X | --- <br>DE-A-2 951 136   (BEHNERT)<br><br>*En entier* | 1,2,3,4,5,6,7 | |
| X | --- <br>FR-A-2 183 337   (BRETING)<br><br>*En entier* | 1,2,3,4,5,6,7 | |
| X | --- <br>DE-A-2 206 450   (GWINNER)<br>*En entier* | 1,2,7 | **DOMAINES TECHNIQUES RECHERCHES (Int. Cl. ³)** |
| E | --- <br>FR-A-2 504 992   (VALROGER)<br><br>*Page  1, ligne 1 - page 2, ligne 28;  page 3, ligne 19 à la fin du document* | 1,2,3,4,5,6,7,8 | F 02 B<br>F 02 C |
| A | --- <br>FR-A- 753 944   (BBC)<br><br>---      -/- | | |

Le présent rapport de recherche a été établi pour toutes les revendications

| Lieu de la recherche<br>LA.HAYE | Date d'achèvement de la recherche<br>23-02-1983 | Examinateur<br>IVERUS D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

-------------------------------------------------

& : membre de la même famille, document correspondant

OEB Form 1503. 03.82

**0079100**
Numéro de la demande

Office européen
des brevets

**RAPPORT DE RECHERCHE EUROPEENNE**

EP  82 20 1363

| | | **DOCUMENTS CONSIDERES COMME PERTINENTS** | Page 2 |

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A- 837 488 (SULZER) | | |
| A | FR-A- 903 974 (SULZER) | | |
| A | GB-A- 800 263 (TOWLE) | | |

**DOMAINES TECHNIQUES RECHERCHES (Int. Cl. ³)**

Le présent rapport de recherche a été établi pour toutes les revendications

| Lieu de la recherche | Date d'achèvement de la recherche | Examinateur |
|---|---|---|
| LA HAYE | 23-02-1983 | IVERUS D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82